Europäisches Patentamt

European Patent Office

Office européen des brevets

(11) Numéro de publication: **0 236 248**
**A1**

# (12) DEMANDE DE BREVET EUROPEEN

(21) Numéro de dépôt: **87420056.1**

(22) Date de dépôt: **25.02.87**

(51) Int. Cl.⁴: **H 02 G 7/14**
**F 16 F 7/14**

(30) Priorité: **28.02.86 FR 8603453**

(43) Date de publication de la demande:
**09.09.87 Bulletin 87/37**

(84) Etats contractants désignés:
**AT CH DE ES GB GR IT LI SE**

(71) Demandeur: **Société Nouvelle des Etablissements Dervaux, S.A.**
**14, rue de la République**
**F-42500 Le Chambon Feugerolles (FR)**

(72) Inventeur: **Novel, Pierre**
**13, rue Jean Giono**
**F-42100 Saint Etienne (FR)**

(74) Mandataire: **Perrier, Jean-Pierre et al**
**Cabinet GERMAIN & MAUREAU 12 rue de la République**
**F-42000 St-Etienne (FR)**

(54) **Amortisseur dynamique de vibrations pour câble.**

(57) Cet amortisseur est du type composé d'un organe 2 de fixation au câble 3, de supports élastiques 4 formant ressorts amortisseurs, disposés de part et d'autre de cet organe de fixation 2, et dont l'une des extrémités est ancrée à cet organe 2, tandis que l'autre extrémité est liée à une masse 5 possédant une forme apte à lui conférer une masse et une inertie.

Selon l'invention, chacun des supports élastiques 4 possède des valeurs de raideur et d'amortissement qui sont différentes dans au moins deux directions perpendiculaires entre elles et inclinées par rapport au plan P1 contenant la face sinusoïdale d'excitation de l'organe 2.

FIG.8

EP 0 236 248 A1

**Description**

"Amortisseur dynamique de vibrations pour câble".

Les câbles aériens sont soumis, sous les effets du vent, à des oscillations dans un plan vertical, d'amplitude et fréquence diverses. Pour limiter les contraintes sur ceux-ci au niveau des points d'ancrage, il est connu de fixer sur les câbles des amortisseurs dynamiques de vibrations, communément appelés "stockbridge". De tels amortisseurs sont destinés à dissiper l'énergie vibratoire entrant en résonance pour au moins une fréquence d'oscillation du câble.

L'invention vise plus particulièrement des amortisseurs composés d'un organe de fixation au câble aérien, de supports élastiques formant ressorts amortisseurs disposés de part et d'autre de cet organe de fixation et dont l'une des extrémités est ancrée à cet organe, tandis que l'autre extrémité est liée à une masse dont l'axe d'inertie est distinct de son point de liaison au support élastique.

De par leur construction, de tels amortisseurs ne sont en résonance maximum qu'à deux fréquences correspondant au nombre de degrés de liberté de la masse : une translation et une rotation autour de son axe d'inertie. La demande de brevet français no 2 358 041 est de ce type mais ajoute un troisième degré de liberté consistant en une oscillation semi-circulaire autour de l'axe longitudinal médian du support élastique par décolage radial du centre de gravité de la masse.

Des dispositifs amortisseurs d'un type plus complexe, c'est à dire comportant des systèmes masse-ressort différents de part et d'autre de l'organe de fixation, ont quatre modes de résonance, obtenus en jouant sur la dissymétrie du système mais fournissant pour chaque fréquence un amortissement moindre puisque une seule masse réagit.

Il faut noter que les études de mécanique vibratoire mettent facilement en évidence que la meilleure dissipation d'énergie, et donc le meilleur amortissment des oscillations d'un câble aérien, peuvent être obtenues lorsque, sur la plage de fréquences d'oscillation, le dispositif amortisseur résonne suivant un grand nombre de fréquences. Comme indiqué plus haut, les dispositifs amortisseurs actuels ont des résultats qui sont éloignés de ceux optimaux fournis par les études théoriques.

L'objet de l'invention est de fournir un amortisseur dynamique, facile à mettre en oeuvre, donc peu onéreux, et dont les moyens d'amortissement ont plusieurs degrés de liberté, c'est à dire sont susceptibles d'entrer en résonance à un grand nombre de fréquences.

A cet effet, dans cet amortisseur du type précité, chacun des supports élastiques possède des valeurs de raideur élastique et d'amortissement qui sont différentes dans au moins deux plans perpendiculaires distincts du plan du mouvement d'excitation du câble.

Avec cet agencement, les masses comportent quatre degrés de liberté et peuvent donc entrer en résonance pour quatre fréquences différentes.

Dans une forme d'exécution de l'invention, chaque support élastique est composé d'au moins deux câbles, ayant des caractéristiques de raideur et d'amortissement données, dont les axes longitudinaux délimitent un plan qui est incliné par rapport au plan vertical du mouvement d'excitation. Ils pourront être enveloppés dans une gaine en matière synthétique qui, apte à assurer un amortissement visco-élastique, est comprimée longitudinalement entre la masse et l'organe de fixation au câble, afin d'optimiser les caractéristiques visco-élastiques des câbles.

Dans une autre forme d'exécution de l'invention, chaque support élastique et d'amortissement est également incliné vers le bas par rapport au plan horizontal passant par son point d'ancrage à l'organe de fixation afin de donner à la masse six degrés de liberté, à savoir trois en translation et trois en rotation.

D'autres caractéristiques et avantages ressortiront de la description qui suit, en référence au dessin schématique annexé, représentant à titre d'exemples non limitatifs, plusieurs formes d'exécution de cet amortisseur.

Figures 1 à 3 sont des vues partielles en perspective qui permettront d'expliquer l'objet de l'invention.

Figure 4 est une vue partielle en perspective, montrant le fonctionnement de l'amortisseur lorsqu'il est monté sur un câble, et montrant les quatre degrés de liberté de la masse "5" (deux rotations, deux translations).

Figures 5 à 7 sont des graphiques représentant la puissance dissipée en fonctin de la fréquence pour chacun des systèmes amortisseurs des figures 1 à 3.

Figure 8 est une vue en perspective avec coupe partielle d'une forme d'exécution de l'amortisseur selon l'invention.

Figure 9 est un graphique représentatif de l'allure de la courbe de la puissance dissipée en fonction de la fréquence pour l'amortisseur de la figure 8.

Figures 10, 11 et 12 sont des vues en coupe transversale partielle du système visco-élastique de figure 8 et montrant trois variantes de réalisation.

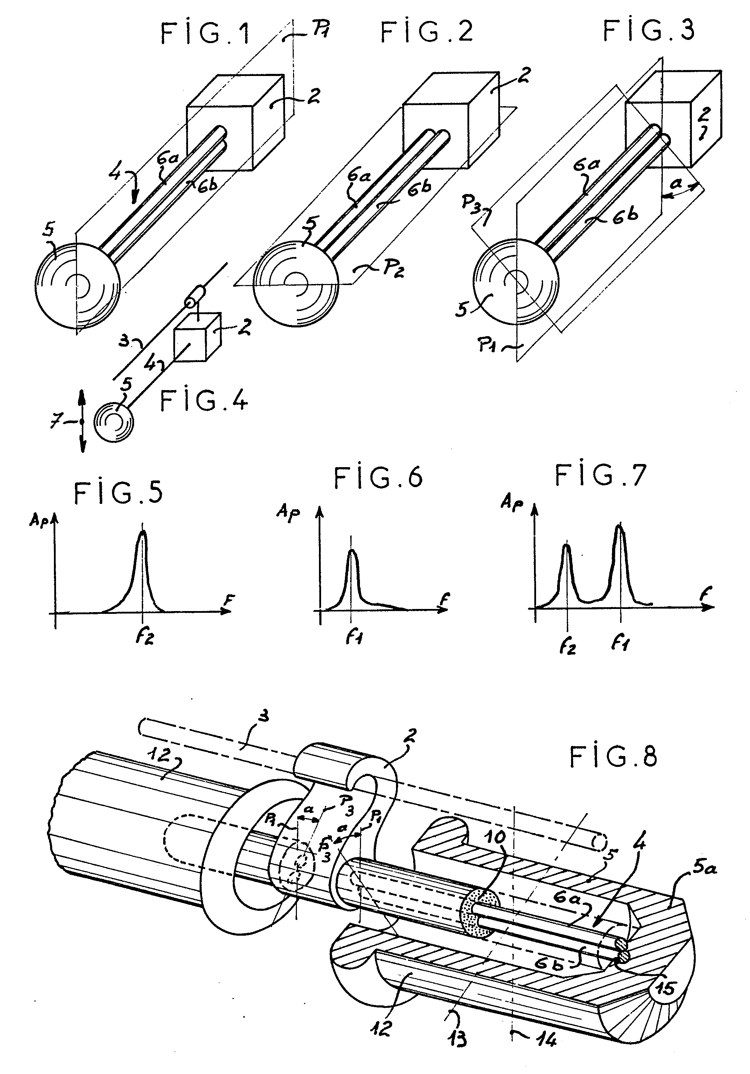

De façon connue, et comme montré figure 4, l'amortisseur, selon l'invention, est du type composé d'un organe 2 de fixation à un câble 3, de deux supports élastiques et d'amortissement désignés de façon générale par 4 et disposés de part et d'autre de l'organe de fixation 2. Chaque support élastique 4 est ancré, par l'une de ses extrémités, au support 2 et est lié, par son autre extrémité, à une masse désignée de façon générale par 5. Chacune des masses possède une forme apte à lui conférer une masse et une inertie par rapport à son point d'ancrage au support élastique d'amortissement.

Selon l'invention, chacun des supports élastiques et d'amortissement 4 possède des raideur et amortissement dont les valeurs sont différentes dans au moins deux directions perpendiculaires entre elles.

La description qui suit, donnée en référence aux figures 1 à 7, est destinée à mieux faire comprendre l'invention. Elle vise un amortisseur dont la masse ponctuelle a son axe d'inertie confondu avec son point d'ancrage au support élastique 4 et ne possédant que des degrés de liberté en translation.

Dans la forme d'exécution de figure 1, le support élastique est composé par deux câbles métalliques 6a-6b, dont les axes longitudinaux sont confondus avec le plan vertical P1 passant par l'organe de fixation 2. Ce plan P1 est celui qui contient la force sinusoïdale d'excitation de l'organe 2 schématisé par la flèche 7 à la figure 4. La réponse d'un tel système est donnée par la figure 5 où l'on observe que, pour une fréquence f2, la masse entre en résonance. La valeur f2 dépend de la raideur élastique des câbles 6a-6b. L'amplitude de la puissance dissipée Ap dépend de la caractéristique d'amortissement qui provient du frottement entre les brins des câbles.

Dans la forme d'exécution représentée à la figure 2, les axes longitudinaux des câbles 6a-6b sont disposés dans un plan horizontal P2, passant par le support 2. Comme montré figure 6, ce système entre en résonance par une fréquence f1 plus faible que f2, dans la mesure où avec cette disjonction, la raideur des câbles est plus faible, en réponse à des oscillations dans le plan P1.

Dans la forme d'exécution de figure 3, le plan P3 contenant les axes longitudinaux des câbles 6a-6b est incliné d'un angle a par rapport au plan vertical P1. Lorsque le câble 3 auquel est accroché l'organe de fixation 2 est soumis à une oscillation dans le plan vertical, cette oscillation se transmet par le support 2 aux câbles 6a-6b et aux masses 5 qu'ils supportent à leurs extrêmités. En raison de l'inclination par rapport au plan d'excitation vertical des câbles composant le support élastique, le système entre en résonance pour chacune des deux valeurs de fréquence f1 et f2 correspondant aux deux valeurs de raideur des câbles 6a-6b décrites ci-dessus. La courbe de réponse de ce système est représentée par la figure 7.

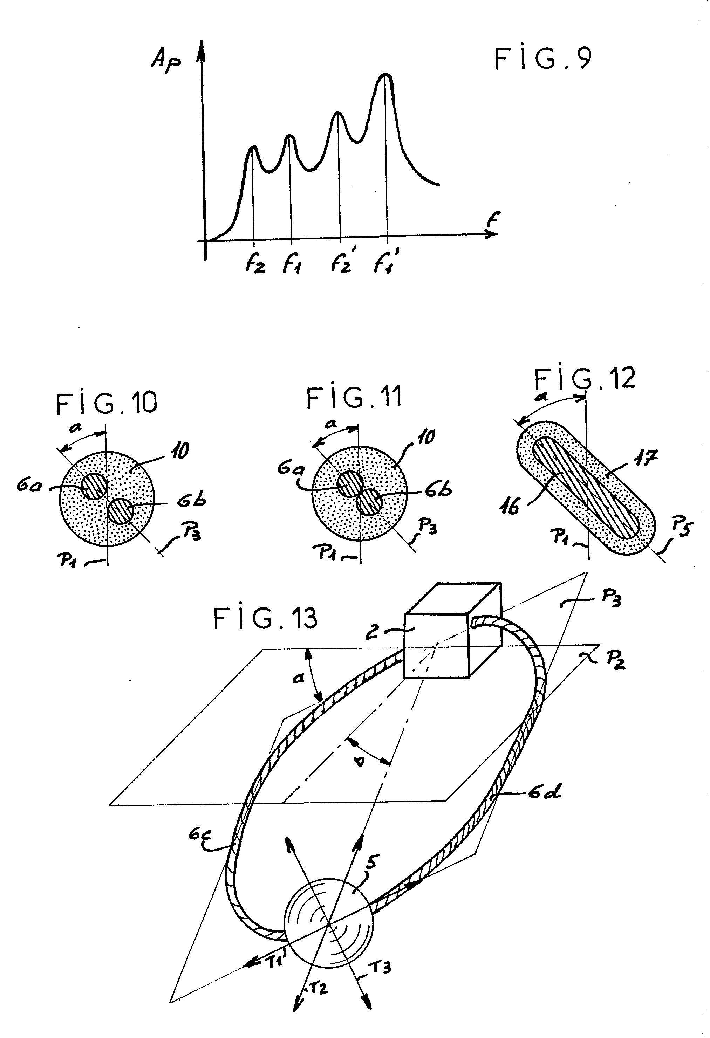

Dans une autre forme de réalisation, représentée à la figure 13, chaque support élastique et d'amortissement 4 est agencé pour posséder des raideurs différentes suivant trois directions, afin de permettre à la masse ponctuelle 5, d'entrer en résonance pour trois fréquences différentes. A cet effet, le support 5, composé ici de deux câbles 6c-6d, espacés et formant une boucle, délimitent par leurs axes longitudinaux un plan P3 qui est incliné transversalement d'un angle a par rapport au plan horizontal P2 et longitudinalement d'un angle b par rapport à ce même plan horizontal P2. Les possibilités de translation de la masse 5 sont indiquées par les flèches T1, T2 et T3.

L'exposé qui précède s'applique à un amortisseur avec des masses ponctuelles n'ayant, par définition, que des degrés de liberté en translation. Lorsque chaque masse est agencée pour présenter un axe d'inertie différent de son point d'ancrage au support, elle possède six degrés de liberté : trois translations et trois rotations. Dans ces conditions, les diverses raideurs du système élastique interviennent de manière différente sur la masse et les axes d'inertie et permettent ainsi à l'amortisseur d'entrer en résonance pour six fréquences différentes, donc de dissiper de la puissance sur six fréquences, puisque ces systèmes élastiques possèdent des caractéristiques d'amortissement.

Enfin, chaque amortisseur étant composé de deux supports élastiques disposés de part et d'autre de l'organe de fixation 2, il est aussi possible de donner à chaque support élastique d'un même amortisseur, des caractéristiques différentes de l'autre support, soit par la valeur de ces raideurs, soit par son ou ses angles d'inclinaison par rapport à l'organe de fixation 2, soit par le poids et la forme de sa masse. Dans ces conditions, chaque support élastique réagit à des fréquences différentes de l'autre.

A la figure 8, représentant une form de réalisation d'un amortisseur dynamique de vibrations, conforme à la forme d'exécution de figure 3, chacun des supports élastiques et d'amortissement 4 est composé de deux câbles 6a-6b juxtaposés, comme montré en section transversale à la figure 11. Ces câbles sont enveloppés dans une gaine en matière synthétique 10 qui, s'étendant entre l'organe de fixation 2 et la masse 5a, est comprimée longitudinalement entre ces deux éléments. Cette gaine en matière synthétique assure un amortissement visco-élastique qui s'ajoute à l'amortissement traditionnellement assuré par le frottement entre eux des brins composant les câbles 6a-6b. La masse 5a est du type en forme de cloche, c'est à dire comporte une jupe 12 qui s'étend longitudinalement autour du support élastique 4 jusqu'à proximité de l'organe de fixation 2 afin de conférer à la masse une plus grande inertie. En outre, cette jupe protège la gaine en matière synthétique 10 contre l'action destructive des rayons ultraviolets. Les axes d'inertie de la masse 5a, représentés en 13 et 14 à la figure 8, sont distincts de la zone d'ancrage 15 de cette masse au support.

La figure 8 met bien en évidence que si les plans P3 contenant les axes longitudinaux des câbles 6a-6b de chacun des supports élastiques 4 sont bien inclinés d'un angle a par rapport au plan vertical d'excitation P1, cette inclinaison est inversée de part et d'autre du support afin que lorsque les masses sont en résonnance simultanément, elles n'entrainent pas de balancement de la mâchoire 2 qui contrarierait la direction du mouvement d'excitation.

Lorsque cet amortisseur dynamique est fixé à un câble aérien 3 (figure 4), il peut réagir à quatre fréquences f1, f2, et f'1, f'2, puisque chaque support élastique présente des raideurs qui sont différentes dans au moins deux directions perpendiculaires et que la masse 5a possède deux degrés de liberté, c'est à dire peut osciller verticalement ou pivoter par rapport au support 4. La figure 9 montre d'ailleurs la courbe d'amortissement obtenue par l'amortisseur de figure 8 et les quatre fréquences f1, f2, f'1 et f'2.

Dans la variante représentée à la figure 10, les deux câbles 6a-6b ne sont pas au contact l'un de l'autre comme dans la forme d'exécution de figure 11, mais sont au contraire espacés l'un de l'autre pour fournir des raideurs différentes, bien que les caractéristiques de ces câbles soient les mêmes que celles des câbles utilisés dans la forme d'exécution représentée aux figures 8 et 11.

La figure 12 montre une autre variante de réalisation dans laquelle les deux câbles 6a-6b sont remplacés par un brin élastique 16 ayant une section transversale sensiblement rectangulaire. Lorsque ce brin est fixé à l'organe d'accrochage 2 en remplacement des câbles 6a-6b, son plan médian vertical P5, visible figure 12, est incliné de la valeur a par rapport au plan médian vertical P1 passant par l'organe de fixation 2. Ce brin 16 peut être également enveloppé par une gaine en matière synthétique 17 comprimée entre 1a masse 5a et le support 2.

## Revendications

1. Amortisseur dynamique de vibrations pour câble du type composé d'un organe 2 de fixation au câble 3, de supports élastiques 4 formant ressorts amortisseurs, disposés de part et d'autre de cet organe de fixation 2, et dont l'une des extrêmités est ancrée à cet organe 2, tandis que l'autre extrêmité est liée à une masse 5 possédant une forme apte à lui conférer une masse et une inertie, caractérisé en ce que chacun des supports élastiques 4 possède des valeurs de raideur et d'amortissement qui sont différentes dans au moins deux plans perpendiculaires entre eux et inclinés par rapport au plan P1 contenant 1a force sinusoïdale d'excitation de l'organe 2.

2. Amortisseur selon 1a revendication 1 caractérisé en ce que chaque support élastique 4 est composé d'au moins deux câbles 6a-6b dont les axes longitudinaux délimitent un plan P3 qui est incliné par rapport au plan P1 contenant la force sinusoïdale d'excitation de l'organe 2.

3. Amortisseur selon 1'ensemble des revendications 1 et 2 caractérisé en ce que les câbles 6a-6b de chaque support élastique 4 sont parallèles entre eux.

4. Amortisseur selon l'ensemble des revendications 1 à 3 caractérisé en ce que les câbles 6a-6b sont au contact l'un de l'autre.

5. Amortisseur selon l'une quelconque des revendications 1 à 3 caractérisé en ce que les câbles 6a-6b sont espacés l'un de l'autre.

6. Amortisseur selon la revandication 1 caractérisé en ce que chaque support élastique 4 est composé d'un brin élastique 13, de section transversale rectangulaire, dont le plan médian transversal P5 est incliné par rapport au plan P1 contenant la force sinusoïdale d'excitation de l'organe de fixation 2.

7. Amortisseur selon l'une quelconque des revendications 1 à 6 caractérisé en ce que chacun des supports élastiques et d'amortissement 4 est enveloppé par une gaine en matière synthétique 10-13 qui, apte à assurer un amortissement visco-élastique, est comprimée longitudinalement entre la masse 5-5a et l'organe 2 de fixation du câble 3.

8. Amortisseur selon la revendication 1 et l'une quelconque des revendications 2 à 7 caractérisé en ce que chaque support élastique et d'amortissement 4 est également incliné vers le bas par rapport au plan horizontal P2 passant par son point d'ancrage à l'organe de fixation 2 afin de donner à la masse 5 six degrés de liberté, à savoir trois en translation et trois en rotation.

9. Amortisseur selon la revendication 1 et l'une quelconque des revendications 1 à 8 caractériseé en ce que les supports élastiques et d'amortissement 4, disposés de part et d'autre de l'organe de fixation 2, ne possèdent pas les mêmes caractéristiques en raideur et amortissement.

FIG.1  FIG.2  FIG.3

FIG.4

FIG.5  FIG.6  FIG.7

FIG.8

0236248

0236248

FIG.9

FIG.10

FIG.11

FIG.12

FIG.13

Office européen
des brevets

**RAPPORT DE RECHERCHE EUROPEENNE**

Numéro de la demande

EP 87 42 0056

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int. Cl.4) |
|---|---|---|---|
| A,D | FR-A-2 358 041 (DULMISON) <br> * En entier * | 1,2,5, 8,9 | H 02 G 7/14 <br> F 16 F 7/14 |
| A | AT-B- 377 647 (LORÜNSER) <br> * Page 3, ligne 39 - page 4, ligne 6; figures 4-6 * | 1 | |
| A | US-A-3 400 209 (FURUKAWA) <br> * Colonne 2, ligne 39 - colonne 3, ligne 67; figures 1-3 * | 1 | |
| A | FR-A-2 215 733 (VSESOJUZNY) <br> * Page 10, ligne 32 - page 11, ligne 13; figure 7 * | 1 | |
| A | US-A-2 688 047 (ALUMINIUM CO.) <br> * Colonne 4, lignes 25-51; figures 1-5 * | 1 | DOMAINES TECHNIQUES RECHERCHES (Int. Cl.4) <br><br> H 02 G 7 <br> F 16 F 7 |

Le présent rapport de recherche a été établi pour toutes les revendications

| Lieu de la recherche | Date d'achèvement de la recherche | Examinateur |
|---|---|---|
| LA HAYE | 05-06-1987 | LINTZ C.H. |